# EUROPÄISCHE PATENTSCHRIFT

(11) **EP 0 780 104 B1**
(45) Veröffentlichungstag und Bekanntmachung des Hinweises auf die Patenterteilung: **12.12.2001**
(21) Anmeldenummer: 96114350.0
(22) Anmeldetag: 07.09.1996
(51) Int. Cl.: A61C 19/00

(54) **Verfahren zum Betreiben eines Bestrahlungsgerät zur Aushärtung von Kunststoffen**
Method for driving an irradiation apparatus for curing plastic substances
Méthode pour se servir d'un appareil d'irradiation pour la polymérisation de résines

(30) Priorität: 11.05.1996 DE 19619155; 22.12.1995 DE 19548330
(43) Veröffentlichungstag der Anmeldung: 25.06.1997
(73) Patentinhaber: Heraeus Kulzer GmbH & Co.KG, 63450 Hanau (DE)
(72) Erfinder: Breuer, Uwe, 61273 Wehrheim (DE); Schödel, Dieter, Dr., 65193 Wiesbaden (DE); Oppawsky, Steffen, 61350 Bad Homburg (DE)
(74) Vertreter: Kühn, Hans-Christian

(56) Entgegenhaltungen:
- EP-A- 0 556 461
- EP-A- 0 610 893
- WO-A-94/26203
- WO-A-95/07731
- DE-A- 3 411 996
- DE-A- 3 644 347
- DE-A- 3 910 438
- FR-A- 2 599 961
- US-A- 5 250 814

## Beschreibung

Die Erfindung betrifft ein Verfahren zum Betreiben eines Bestrahlungsgerätes zur Aushärtung von Kunststoffen mit einem Gehäuse, an dem ein Lichtaustrittsteil angeordnet ist.

Ein Verfahren gemäß dem Oberbegriff des Anspruchs 1 ist aus WO-A-95 07731 bekannt.

Derartige Bestrahlungsgeräte sind aus dem Stand der Technik vielfach bekannt. Beispielsweise aus DE 34 11 996 ist ein Bestrahlungsgerät zur Aushärtung von Dentalkunststoffen bekannt. Dieses Gerät ist als Handgerät ausgebildet, bei dem das Gehäuse als Lichtquelle eine Lampe, beispielsweise eine Halogenlampe enthält. Das Gehäuse enthält des weiteren die zur Lichterzeugung benötigten elektrischen Anschlüsse, gegebenenfalls einen Transformator zum Umsetzen der Netzspannung in die Betriebsspannung der Lichtquelle sowie außerdem Luftführungskanäle, einen Ventilator und Öffnungen zur Abfuhr der beim Betrieb des Bestrahlungsgerätes erzeugten Wärme. Das Licht wird im Inneren des Gehäuses in einen Lichtleiter eingekoppelt, der als Lichtaustrittsteil dient und an dessen außerhalb des Gehäuses angeordnetem Ende das von der Lichtquelle erzeugte Licht austritt. Das austretende Licht wird zur Aushärtung von Kunststoffen verwendet. Das aus DE 34 11 996 bekannte Bestrahlungsgerät ist als Handgerät flexibel einsetzbar zur Aushärtung von Dentalkunststoffen, wobei eine Aushärtung sowohl im Mund des Patienten als auch beispielsweise aus einem Arbeitstisch erfolgen kann. Des weiteren sind stationäre Bestrahlungsgeräte bekannt, die einen im Inneren ihres Gehäuses angeordneten Bestrahlungsraum aufweisen. Bei derartigen Geräten ist auf das Lichtaustrittsteil innerhalb des Gehäuses angeordnet und in den Bestrahlungsraum gerichtet. Es sind auch stationäre Geräte bekannt, bei denen als Lichtaustrittsteil ein Lichtleiter nach außen geführt wird. Dabei ist an dem äußeren Ende des Lichtleiters ein Handgriff angeordnet, mit dem der Lichtleiter geführt wird. Derartige Anordnungen werden ähnlich wie die oben beschriebene als Handgerät genutzt, haben jedoch aufgrund der begrenzten Länge des Lichtleiters eine begrenzte örtliche Reichweite.

Allen derartigen Geräten ist ein recht komplizierter Aufbau gemeinsam, da nicht nur Licht über eine mehr oder weniger große Distanz beispielsweise mit einem Lichtleiter geführt werden muß, sondern es muß auch die entstehende Wärme auf geeignete Weise abgeführt werden. Die ausreichende Wärmeabfuhr bedingt entsprechend große Abmessungen des Gehäuses sowie zusätzliche Einbauten, wie Ventilatoren.

Aufgabe der vorliegenden Erfindung ist es, ausgehend von den aus dem Stand der Technik bekannten Anordnungen eine Bestrahlungsgerät und ein Verfahren zum Betreiben des Gerätes bereit zu stellen, das einen einfachen Aufbau und ein geringes Eigengewicht aufweisen kann und gleichzeitig eine optimale Bestrahlung ermöglicht.

Erfindungsgemäß wird diese Aufgabe dadurch gelöst, daß das Lichtaustrittsteil mindestens eine Laserdiode zur Aussendung einer Strahlung im Wellenlängenbereich von etwa 320 nm bis etwas 550 nm, insbesondere von etwa 400 nm bis 500 nm aufweist. Dadurch können lichthärtende Kunststoffe ausgehärtet werden. Die bei der Verwendung von Laserdioden als Strahlungsquelle entstehende Wärme ist vernachlässigbar gering, so daß auf die üblichen Mittel zur Wärmeabfuhr verzichtet werden kann. Außerdem kann die Stromversorgung der Laserdiode über ein praktisch beliebig langes Kabel erfolgen, so daß die zur Erzeugung der elektrischen Energie notwendigen und hinreichend bekannten Bauelemente an einem passenden Ort fest installiert werden können. Dadurch kann das Bestrahlungsgerät selbst sehr klein und handlich ausgebildet werden und ist sehr flexibel einsetzbar. Beispielsweise ist es möglich, die Energieversorgung für derartige Bestrahlungsgeräte ähnlich dem üblichen elektrischen Netz auszulegen, bei dem an verschiedenen Steckdosen Energie abgegriffen werden kann. So benötigt man zur Bestrahlung an beliebigen Orten lediglich ein Gehäuse, das als Griffstück sehr klein ausgebildet werden kann und an dem das Lichtaustrittsteil angeordnet ist, das an seinem äußeren Ende die Laserdiode trägt. Das Bestrahlungsgerät kann dabei als Handgerät oder als stationäres Gerät ausgebildet sein. Während bei Handgeräten die gute Handhabbarkeit und Beweglichkeit durch geringe Abmessungen ermöglicht werden, kann ein stationäres Gerät der Größe der Bestrahlungskammer eng angepaßt werden. Darüber hinaus hat eine derartige Anordnung den Vorteil, daß die benötigte Energie wesentlich geringer ist als bei herkömmlichen Geräten, da Laserdioden, wie oben beschrieben, einen wesentlich höheren Wirkungsgrad als herkömmliche Lampen ausweisen. Dies hat außerdem zur Folge, daß durch die Arbeit mit niedrigeren Strömen und Spannungen die Sicherheit für die Bedienperson erhöht wird.

Das Bestrahlungsgerät weist zweckmäßigerweise einen Sensor oder eine ähnliche Anordnung zur Messung der Intensität des von der Laserdiode abgestrahlten Lichtes auf, der über eine Auswerteeinheit zur Auswertung und Weiterverarbeitung des Intensitätssignals mit einer Anzeige, z.B. einer optischen Anzeige verbunden ist, um ein Unterschreiten eines vorbestimmten Grenzwertes der Intensität der Strahlung der Laserdiode der Bedienperson anzugeben.

Vorzugsweise weist das Gehäuse ein Griffteil mit Schalter auf, so daß die Bedienung erleichtert wird.

Die der Erfindung zugrundeliegende Aufgabe wird für ein Verfahren zum Betreiben des eingangs beschriebenen Gerätes dadurch gelöst, daß der Betriebsstrom der Laserdiode gepulst ist. Dadurch kann eine wesentlich höhere Intensität erreicht werden. Eine Laserdiode kann gepulst mit höherem Strom betrieben werden. Die Pulsfrequenz kann während des Betriebs erhöht werden, so daß der Aufbau von Spannungen in dem zu bestrahlenden Material verhindert wird. Während oder nach der Erhöhung der Pulsfrequenz kann der Betriebsstrom der Laserdiode bis zu dem möglichen Maximalwert erhöht werden. Für den Impulsbetrieb der Laserdiode können die üblichen, dem Fachmann geläufigen Schaltungsanordnungen verwendet werden.

Die Erfindung ist weiterhin auf die Verwendung des erfindungsgemäßen Bestrahlungsgerätes zur Aushärtung von Dentalkunststoffen gerichtet. Gerade in einer Zahnarztpraxis oder auch beim Dentaltechniker werden sehr kleine Kunststoffmengen ausgehärtet. Mit dem erfindungsgemäßen Bestrahlungsgerät lassen sich diese kleinen Mengen besonders vorteilhaft aushärten, da der Lichtstrahl der Laserdiode gut führbar ist. Durch die Möglichkeit, das Gehäuse mit dem Handgriff sehr klein auszubilden, kann auch im Mund des Patienten an nahezu jeder beliebigen Stelle bestrahlt werden.

Erfindungsgemäß ist das Bestrahlungsgerät auch zur Aushärtung von technischen Kunststoffen zu verwenden, beispielsweise von Kunststoffen, die in der Histologie oder Metallographie zur Einbettung von Proben verwendet werden.

Nachfolgend wird ein Ausführungsbeispiel der Erfindung anhand einer Zeichnung näher erläutert.
- Fig. 1: zeigt ein erfindungsgemäßes Handgerät und
- Fig. 2: zeigt ein erfindungsgemäßes stationäres Gerät, schematisch.

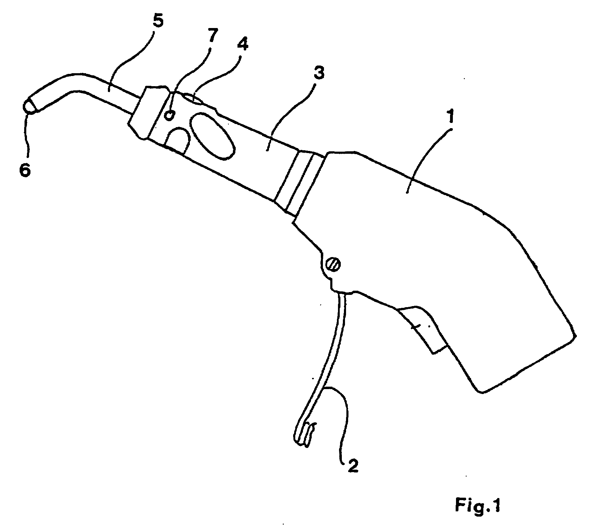

Das erfindungsgemäße Bestrahlungsgerät in Figur 1 weist ein Gehäuse 1 auf, das eine Zuleitung 2 für die elektrische Energiezufuhr besitzt. Das Gehäuse 1 ist als Gehäuse eines nicht ortsfesten Handgerätes ausgestaltet. Es weist ein Griffteil 3 auf mit einem Schalter 4. Das Griffteil ist im wesentlichen zylinderförmig ausgebildet, wobei an einem Ende des Zylinders ein Lichtaustrittsteil 5 angeordnet ist, an dessen äußerem Ende die Laserdiode 6 angeordnet ist. Das Lichtaustrittsteil 4 hat die Form eines flexibelen Stabes, der entsprechend den Notwendigkeiten am Bestrahlungsort gebogen werden kann. Die Laserdiode 6 sendet Strahlen im Wellenlängenbereich von etwa 320 bis 550 nm, insbesondere 400 bis 500 nm aus. Die Strahlungsenergie beeinflußt die Zeit, die zur Aushärtung des Kunststoffes notwendig ist und ist entsprechend steuerbar.

Das Bestrahlungsgerät weist eine Kontroll-LED auf, die als Anzeige 7 zum Signalisieren des alterungsbedingten Unterschreitens einer vorbestimmten Grenzintensität der Stahlung der Laserdiode 6 fungiert. Zur Messung und Auswertung der Intensität der Stahlung der Laserdiode 6 können übliche und bekannte Anordnungen verwendet werden.

Anstelle der in der Zeichnung dargestellten Anordnung sind auch andere Anordnungen bzw. Ausbildungen eines Gehäuses mit Griffteil denkbar. Beispielsweise kann das Gehäuse 1 als Ganzes als Griffteil 3 ausgebildet sein, wobei das Griffteil 3 die Form einer Verdickung des Lichtaustrittsteiles 5 hat.

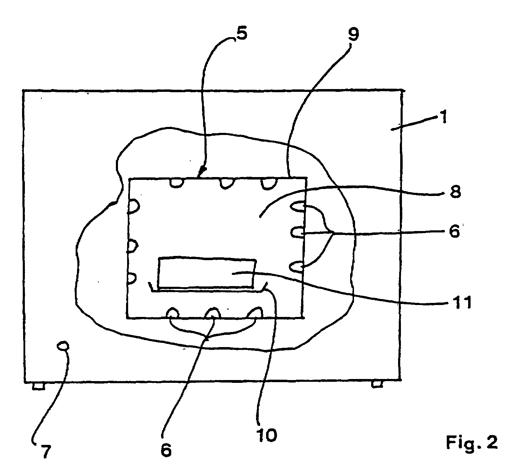

Auch Ausführungsformen der Erfindung sind denkbar, bei denen das Lichtaustrittsteil mehrere Laserdioden beträgt, beispielsweise ein stationäres Bestrahlungsgerät mit einer im Gehäuse 1 angeordneten Bestrahlungskammer kann eine Vielzahl von Laserdioden 6 aufweisen, die den Bestrahlungsraum von mehreren Seiten umgeben, so daß ein auszuhärtendes Kunststoffteil allseitig gleichmäßig bestrahlt werden kann. In Figur 2 wird ein derartiges Bestahlungsgerät dargestellt. In einem Gehäuse 1 ist ein üblicher Bestrahlungsraum 8 angeordnet, der von Laserdioden 6 umgeben ist. Die Laserdioden 6 können an einem käfigähnlichen Gestell 9 um die Aufnahme 10 für das zu bestahlende Teil 11 (z. B. Dentalteil) angeordnet sein. An dem Gehäuse 1 ist neben in Figur 2 nicht dargestellten Bedienelementen die Anzeige 7 angeordnet.

Die Laserdioden 6 können gepulst betrieben werden. Ab Beginn der Bestrahlung werden die Pulsfrequenz und der Strom kontinuierlich erhöht. Durch diese Intensitätssteigerung wird die Ausbildung von Spannungen in dem zu bestrahlenden Material (Dentalkunststoffe oder technische Kunststoffe) verhindert.

## Patentansprüche

1. Verfahren zum Betreiben eines Bestrahlungsgerätes zur Aushärtung von Kunststoffen mit einem Gehäuse, an dem ein Lichtaustrittsteil (5) angeordnet ist, wobei das Lichtaustrittsteil (5) mindestens eine Laserdiode (6) zur Aussendung einer Strahlung im Wellenlängenbereich von etwa 320 nm bis 550 nm aufweist, wobei der Betriebsstrom der Laserdioden (6) gepulst ist, **dadurch gekennzeichnet, daß** während des Betriebs die Pulsfrequenz erhöht und während oder nach der Erhöhung der Pulsfrequenz der Betriebsstrom der Laserdioden (6) erhöht wird.

2. Verfahren nach Anspruch 1, **dadurch gekennzeichnet, dass** das Gehäuse (1) ein Griffteil (3) mit Schalter (4) aufweist.

3. Verfahren nach Anspruch 1 oder 2, **dadurch gekennzeichnet, dass** ein Sensor die Intensität des von der Laserdiode (6) abgestrahlten Lichtes misst, der über eine Auswerteeinheit mit einer Anzeige (7) verbunden ist der Abfalls der Lichtintensität der Laserdiode (6) unter einen vorbestimmten Grenzwert angezeigt wird.

4. Verfahren nach einem der Ansprüche 1 bis 3, **dadurch gekennzeichnet, dass** das Bestrahlungsgerät als Handgerät ausgebildet ist.

5. Verfahren nach einem der Ansprüche 1 bis 3, **dadurch gekennzeichnet, dass** das Bestrahlungsgerät als stationäres Gerät ausgebildet ist.

6. Verwendung des Verfahrens nach Anspruch 1 zur Aushärtung von Dentalkunststoffen.

7. Verwendung des Verfahrens nach Anspruch 1 zur Aushärtung von technischen Kunststoffen.

## Claims

1. Method for operation of an irradiator for curing plastic materials with a casing on which a light-emitting part (5) is arranged, wherein the light-emitting part (5) has at least one laser diode (6) for emission of radiation in the wavelength range of from about 320 nm to 550 nm, and wherein the operating current of the laser diodes (6) is pulsed, **characterized in that** the pulse frequency is increased during operation, and the operating current of the laser diodes (6) is increased during or after the increase in pulse frequency.

2. Method according to Claim 1, **characterized in that** the casing (1) has a handgrip part (3) with switch (4).

3. Method according to Claim 1 or 2, **characterized in that** the intensity of the light emitted by the laser diode (6) is measured by a sensor which is connected via an evaluation unit to an indicator (7) for indicating any drop in the light intensity of the laser diode (6) below a predetermined limit

4. Method according to any one of Claims 1 to 3, **characterized in that** the irradiator is constructed as a hand-held tool.

5. Method according to any one of Claims 1 to 3, **characterized in that** the irradiator is constructed as a stationary apparatus.

6. Use of the method according to Claim 1 for curing dental plastics.

7. Use of the method according to Claim 1 for curing industrial plastics.

## Revendications

1. Procédé de fonctionnement d'un appareil d'irradiation en vue du durcissement de matières plastiques, équipé d'un boîtier sur lequel est disposée une partie d'émergence de lumière (5), la partie d'émergence de lumière (5) présentant au moins une diode laser (6) en vue de l'émission d'un rayonnement dans la plage des longueurs d'onde comprises entre environ 320 nm et 550 nm, le courant de fonctionnement des diodes laser (6) étant pulsé, **caractérisé en ce que** durant le fonctionnement, la fréquence d'impulsions est accrue et durant ou après l'accroissement de la fréquence des impulsions, le courant de fonctionnement des diodes laser (6) est accru.

2. Procédé selon la revendication 1, **caractérisé en ce que** le boîtier (1) présente une poignée (3) munie d'un interrupteur (4).

3. Procédé selon la revendication 1 ou 2, **caractérisé en ce qu'**un capteur mesure l'intensité de la lumière rayonnée par la diode laser (6), qui est relié par l'intermédiaire d'une unité d'évaluation à un affichage (7) qui indique la chute de l'intensité lumineuse de la diode laser (6) au-dessous d'une valeur limite prescrite.

4. Procédé selon une des revendications 1 à 3, **caractérisé en ce que** l'appareil d'irradiation est réalisé sous la forme d'un appareil portatif.

5. Procédé selon l'une des revendications 1 à 3, **caractérisé en ce que** l'appareil d'irradiation est réalisé sous la forme d'un appareil fixe.

6. Utilisation du procédé selon la revendication 1 en vue du durcissement de matières plastiques dentaires.

7. Utilisation du procédé selon la revendication 1 en vue du durcissement de matières plastiques techniques.
